Europäisches Patentamt

European Patent Office

Office européen des brevets

(11) Veröffentlichungsnummer: **0 062 78**
**A1**

# (12) EUROPÄISCHE PATENTANMELDUNG

(21) Anmeldenummer: 82102647.3

(22) Anmeldetag: 29.03.82

(51) Int. Cl.³: **F 16 B 7/08**

(30) Priorität: **03.04.81 HU 86181**

(43) Veröffentlichungstag der Anmeldung: **13.10.82**
**Patentblatt 82/41**

(84) Benannte Vertragsstaaten: **AT BE DE FR GB IT LU NL SE**

(71) Anmelder: **Villamosgép és Alkatrészgyárto Ipari Szövetkezet, Rákos u. 65, Budapest XV (HU)**

(72) Erfinder: **Latinovics, László, Gyalog u. 9/191, Budapest (HU)**

(74) Vertreter: **Bardehle, Heinz, Dipl.-Ing., Herrnstrasse 15 Postfach 260251, D-8000 München 26 (DE)**

(54) Vorrichtung zur Knotenpunkt-Verbindung von Stangen und/oder Rohren.

(57) Die Vorrichtung zur Knotenpunkt-Verbindung von Stangen und/oder Rohren besteht aus einem zur Aufnahme der zu verbindenden Stangen und/oder Rohre mit Öffnungen versehenen Verbindungsstück (3), ferner aus einem Fixierungsstück (5) zum Festhalten der Stangen (1, 2) und/oder Rohre im Verbindungsstück (3). Das Fixierungsstück (5) ist als gegenüber dem Verbindungsstück (3) bewegbares und dabei die zusammenfassenden Stangen und/oder Rohre miteinander und mit dem Verbindungsstück selbstsperrend verspannendes keilartiges bzw. exzentrisches Element ausgestaltet.

0062278

# VORRICHTUNG ZUR KNOTENPUNKT-VERBINDUNG VON STANGEN UND/ODER ROHREN

Die Erfindung betrifft eine Vorrichtung zur Verbindung durch Knotenpunktbildung von Stangen und/oder Rohren, vor allem mit Verwendung grösser bemessener Rohre und Stangen zu in verschiedenen Richtungen beanspruchten Gerüsten oder Gestellen.

Bekannt sind solche, mit Verwendung von Rohren oder Stangen hergestellte Konstruktionen, bei deren Aufbau am Bestimmungsort als Hauptgesichtspunkt die Schnelligkeit, ferner auch ihre Widerstandsfähigkeit gegen die auftretenden Beanspruchungen, ihre Dauerhaftigkeit und Sicherheit usw.

A 2445-3380 MJ

zur Bedingung vorangestellt werden. Solche Konstruktionen sind z.B. Baugerüste in der Bauindustrie, ferner Gestelle und Regale in Magazinen und Lagerhäusern, Einzäunungen, Sport- und Spielplatz-Umgrenzungen, Spielplatzgeräte z.B. die Stützgerüste von Schaukeln usw.

Bei den im Handelsverkehr erhältlichen derartigen Vorrichtungen sind die Verbindungselemente meist Gußstück-Knotenpunkte, bei denen der Andruck für die Verbindung durch "Inbiss"-Schrauben mit einem Hohlschraubenschlüssel ausgeübt wird. (Solche Verbindungen sind z.B. in dem USA-Katalog "Wholesale Industrieal Number 763" (auf Seite 23 zu sehen). Ihre Nachteile sind die kostspielige Fertigung und die verhältnismässig schwerfällige Montage. Ferner fehlt hier die Sicherheit, ob der Anpreßdruck auch ausreichend ist.

In der HU-PS 170·099 sind die zu einem Rohrgestell verwendbaren Verbindungsschellen beschrieben, die jedoch den Beanspruchungen nur in geringem Maße gewachsen sind, zur Montage aber viele Zeit erfordern. Außerdem werden sie aus Blechen durch Ausstanzen und durch Pressen hergestellt; sie sind kompliziert gestaltet, und können nur durch umständliche Montagearbeit aus einer verhältnismäßig großen Anzahl von Einzelstücken zusammengebaut werden.

Ziel der Erfindung ist die Vermeidung der obigen Mängel.

Die durch die Erfindung zu lösende Aufgabe besteht somit darin, für die Knotenpunktverbindungen von Stangen und/oder Rohren eine Vorrichtung zu schaffen, mittels welcher die umständlichen Verschraubungsverbindungen vermieden werden können, und die Spannoperation mit einer einzigen Bewegung vollzogen werden kann, wobei die Fertigung und Montage einfacher wird und einen geringeren Aufwand erfordert als bei den bisher bekannten Lösungen.

Bei der Lösung der gestellten Aufgabe gingen wir von einer Vorrichtung zur Knotenpunkt-Verbindung aus, bei welcher das Knotenpunktverbindungsstück mit den zur Aufnahme der zu verbindenden Stangen und/oder Rohren vorgesehenen Öffnungen versehen ist, ferner ein Fixierstück zum Festhalten dieser Teile im Verbindungsstück hat. Diese Vorrichtung wurde erfindungsgemäß dahingehend weiterentwickelt, daß das Fixierstück gegenüber dem Verbindungsstück bewegbar ist und hierbei als keilartig oder exzentrisch verspannende Einheit so ausgestaltet ist, daß die zu verbindenden Elemente miteinander und/oder dem Verbindungsstück selbstschließend verspannt werden.

Im folgenden wird die Erfindung anhand von lediglich Ausführungswege darstellenden Zeichnung näher erläutert. Es zeigt:

Fig.1:　Erstes Ausführungsbeispiel der erfindungsgemäßen Vorrichtung perspektivisch, teils im Schnitt dargestellt.

Fig.2:　Spannschlüssel für die Vorrichtung nach Fig.1; perspektivisch dargestellt.

Fig.3:　Detail aus Fig.1

Fig.4 und Fig.5:　Einige Anwendungsbeispiele der Vorrichtung nach Fig.1-3 bei Stellagen.

Fig.6 und Fig.7:　Variante der Vorrichtung nach Fig.1-3 mit horizontal sich kreuzenden Rohren /Fig.6, Seitenansicht, teils Schnitt; Fig.7, Draufsicht/.

Fig.8:　Zweites Ausführungsbeispiel der erfindungsgemäßen Vorrichtung zur Knotenpunkt-Verbindung, Seitenansicht.

Fig.9: Draufsicht nach Fig.8.

Fig.10: Schnitt X-X in Fig.8.

Fig.11: Drittes Ausführungsbeispiel der Vorrichtung zur Knotenpunkt-Verbindung gemäß der Erfindung, Seitenansicht.

Fig.12: Draufsicht nach Fig.11.

Fig.13: Schnitt XIII-XIII in Fig.11.

Fig.14: Viertes Ausführungsbeispiel der Vorrichtung zur Knotenpunkt-Verbindung gemäß der Erfindung; Seitenansicht.

Fig.15: Draufsicht nach Fig.14.

Fig.16: Schnitt XVI-XVI in Fig.14.

Fig.17: Fünftes Ausführungsbeispiel der Vorrichtung zur Knotenpunkt-Verbindung gemäß der Erfindung; Draufsicht.

Fig.18: Schnitt XVIII-XVIII in Fig.17.

In den Zeichnungen wurden die gleichen Einzelteile mit denselben Bezugsnummern bezeichnet. So wurden in den Zeichnungen die miteinander zu verbindende Rohre und/oder Stangen jeweils mit 1 bzw. 2 bezeichnet.

Die erfindungsgemäße Vorrichtung zur Knotenpunkt--Verbindung wird als Ganzes mit 3 bezeichnet. Ihre Verbindungseinheit $3_A$ ist im vorliegenden Falle ein Rohrstück, das zur Durchführung der zueinander quergerichteten Stangen 1 und 2 mit Öffnungen 4 versehen ist. In eingebautem Zustand befindet sich zwischen den Stäben 1 und 2 in dem Verbindungsstück $3_A$ ein Spanneinsatz 5.

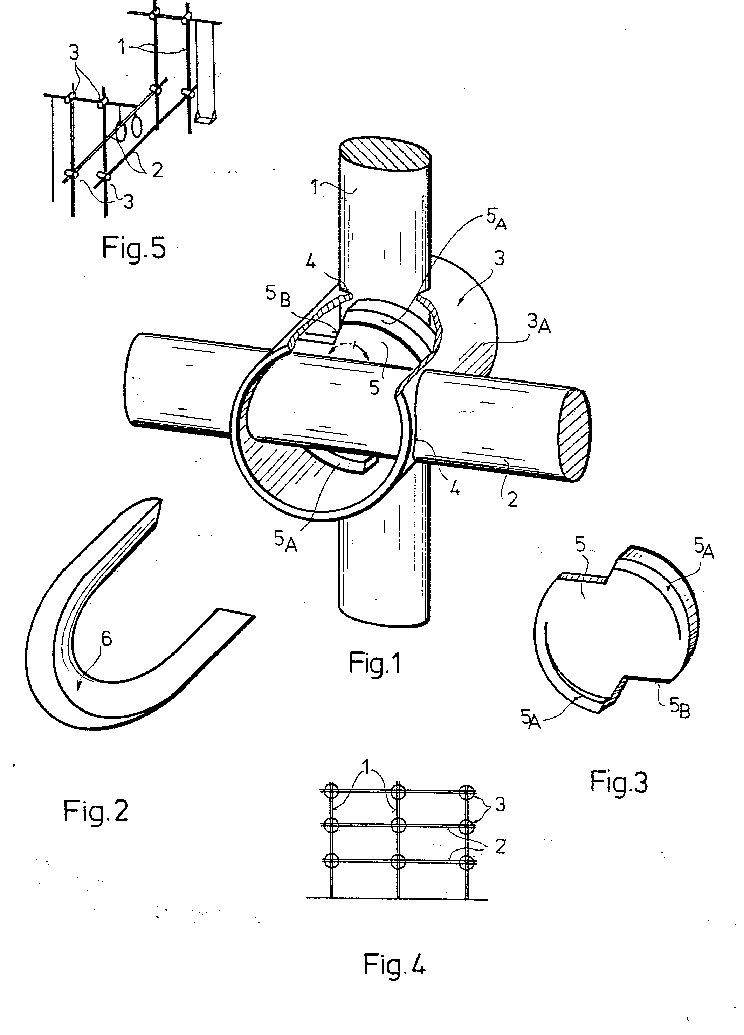

Der Spanneinsatz 5 ist detaillierter in Fig. 3 zu sehen. Er ist hier ein scheibenartiges Element, das in dem Verbindungsstück $3_A$ verdrehbar eingesetzt ist, und im vorliegenden Falle an seiner vorderen Stirnseite mit zwei axialen Exzenterprofilen $5_A$ versehen ist. Die bogenförmigen Exzenterprofile $5_A$ sind so ausgestaltet, daß sie die beiden in die Öffnungen 4 eingeführten Stangen 1 und 2 keilartig auseinanderspannen und in dieser Stellung selbstsperrend festhalten (nach einer entsprechenden Verdrehung des Spanneinsatzes 5).

Für diese Verdrehung ist der Spanneinsatz 5 mit zwei einander gegenüberliegenden Öffnungen $5_B$ versehen, in welche die Schenkel eines in Fig.2 dargestellten Profilschlüssels 6 eingesetzt werden können. (Die rückwärtige Stirnfläche des Spanneinsatzes 5 ist hier eine ebene Fläche).

Die praktische Anwendung der in Fig.1-3 dargestellten Vorrichtung 3 geschieht so, daß zunächst der Stab 1 durch die Öffnung 4 des Verbindungsstückes $3_A$ hindurchgesteckt, danach aber der Spanneinsatz 5 eingesetzt, schließlich die Stange 2 durch die andere Öffnung 4 hindurchgesteckt wird. Hierauf wird der Profilschlüssel 6 in die Öffnungen $5_B$ des Spanneinsatzes 5 eingesetzt, welche sich bei gelöster Stellung des Spanneinsatzes in der in Fig.1 dargestellten Stellung befinden. Danach wird der Profilschlüssel 6 im Sinne des Uhrzeigers um etwa $90^o$ verdreht, wodurch eine zuverläßige, selbstsperrende Verbindung zwischen den Stangen 1 und 2 bzw. dem Verbindungsstück $3_A$ mit einer einzigen Handbewegung zustande gebracht wird.

Die obige Lösung hat noch den zusätzlichen Vorteil, daß die am Rand des Spanneinsatzes 5 ausgebildeten Exzenterprofile $5_A$ die von dem Verbindungsstück $3_A$ erfaßten und zusammengehaltenen Stangen- bzw. Rohrabschnitte fast ausschließlich nur auf Schub beanspruchen (was wesentlich günstiger als bei den bisher bekannten Lösungen ist, wo diese auch noch durch ein Biegungsmoment beansprucht werden).

Den Anstieg der Exzenterprofile $5_A$, welche man als bogenförmige Keile betrachten kann, wählten wir zu unseren Versuchen mit $5^o$.

In Fig.4 und Fig.5 sind Spielplatz-Geräte bzw. Magazingestelle zu sehen, die mit Knotenpunkt-Vorrichtungen zur Verbindung 3 gemäß der Erfindung (nach Fig.1-3) errichtet sind.

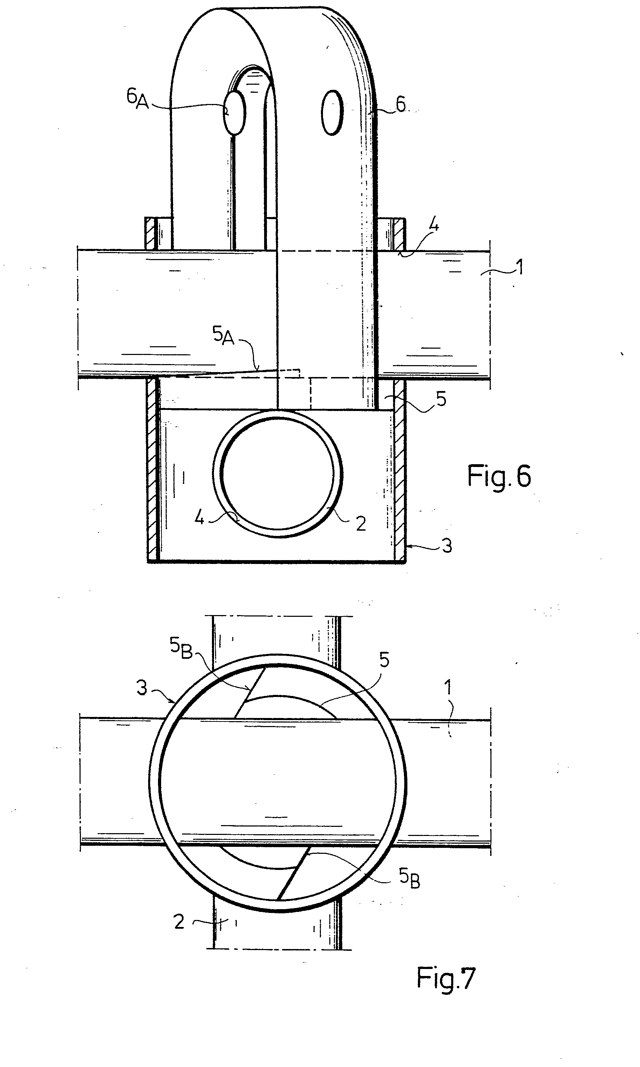

Die Vorrichtung 3 nach Fig.6 und Fig.7 ist im Wesen gleich mit der in Fig.1-3 dargestellten Lösung, doch dienen diese Verbindungsstücke hier zu Verbindung von solchen Stangen 1 und 2, die sich in einer horizontalen Ebene kreuzen. Der Profilschlüssel ist in diesem Falle für den in der Zeichnung nicht eingezeichneten Handgriff mit Öffnungen $6_A$ versehen. Sinngemäß ist hier der Spanneinsatz 5 in horizontaler Stellung eingebaut.

Selbstredend können außer den dargestellten Varianten die Knotenpunkt-Verbindungen gemäß der Erfindung auch bei Kreuzungspunkten von in jeder beliebigen Ebene gelegenen Stangen bzw. Rohren verwirklicht werden.

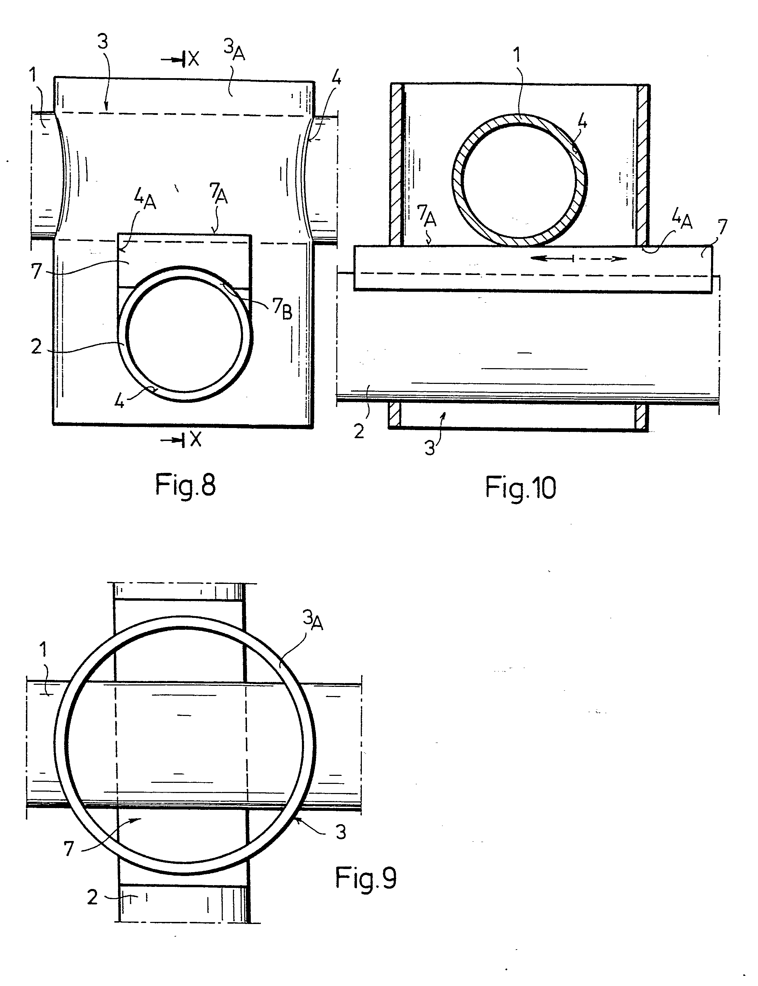

In Fig.8-10 weicht die Vorrichtung 3 in der Ausgestaltung des Spanneinsatzes von den oben beschriebenen Ausführungsbeispiele ab, da er als Spannkeil 7 ausgestaltet ist. Die zu verbindenden Elemente wurden hier als Rohre 1 und 2 eingezeichnet.

Eine obere Keilfläche $7_A$ des Spannkeils 7 ist als selbstsperrender Keil ausgebildet, und arbeitet mit dem Rohr 1 zusammen, während die Stützfläche $7_B$ des Keils auf dem Mantel des Rohres 2 aufliegt, und deshalb als Zylinderfläche von einem, dem Rohr 2 entsprechenden Krümmungshalbmesser ausgestaltet ist. Die Öffnungen 4 des Verbindungsstückes $3_A$ für das Rohr 2 sind zur Durchführung des Spannkeiles 7 mit eckigen Bearbeitungen $4_A$ versehen. Das selbstsperrende Zusammenfassen der Rohre 1 und 2 miteinander bzw. mit dem Verbindungsstück $3_A$ geschieht hier durch das längsgerichtete Eintreiben des Spannkeiles 7.

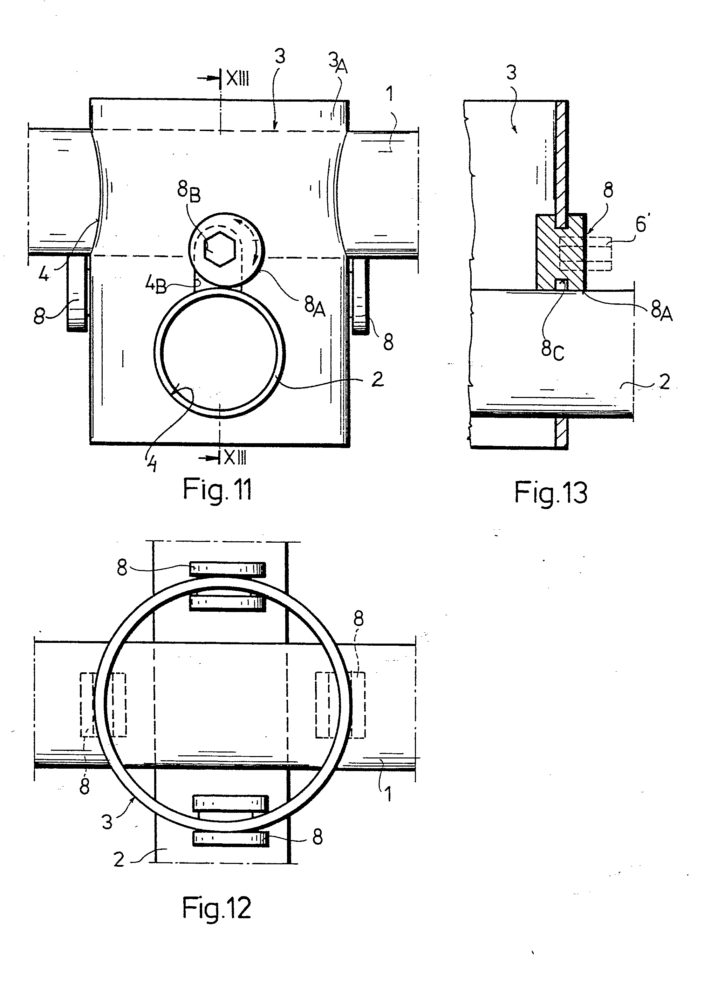

Die in Fig.11-13 zu sehende weitere Ausführungsform unterscheidet sich von den obigen Lösungen in der Ausgestaltung des Spanneinsatzes, ferner darin, daß hier die Fixierungsverbindung nicht mit einem zwischen den Rohren angeordneten Spanneinsatz geschieht, sondern mit je zwei Exzentereinsätzen 8, die zwischen das Rohr und das Verbindungsstück $3_A$ eingesetzt werden. Diese Ausführungsart kann besonders dort von Vorteil sein, wo mehr als zwei Stangen und/oder Rohre in einem Knotenpunkt verbunden werden sollen.

Der Exzentereinsatz 8 hat ein an seiner Stirnfläche ausgestaltetes radiales Exzenterprofil $8_A$ und eine Öffnung $8_B$, welche hier zum Ansetzen eines Sechskantenprofilschlüssels geeignet ist. Der Exzentereinsatz 8 ist ferner mit einer Nut $8_C$ versehen, durch welche er in die Ausnehmung $4_B$ der Öffnung 4 eingeführt werden kann, wo er sich darauf abstützt. Das selbstsperrende Zusammenspannen der Rohre und des Verbindungsstückes $3_A$ geschieht durch das Verdrehen der Exzentereinsätze 8. Diese Ausführungsart hat noch den zusätzlichen Vorteil, daß dadurch eine Verkleinerung des Abstandes zwischen den Rohren 1 und 2 ermöglicht wird.

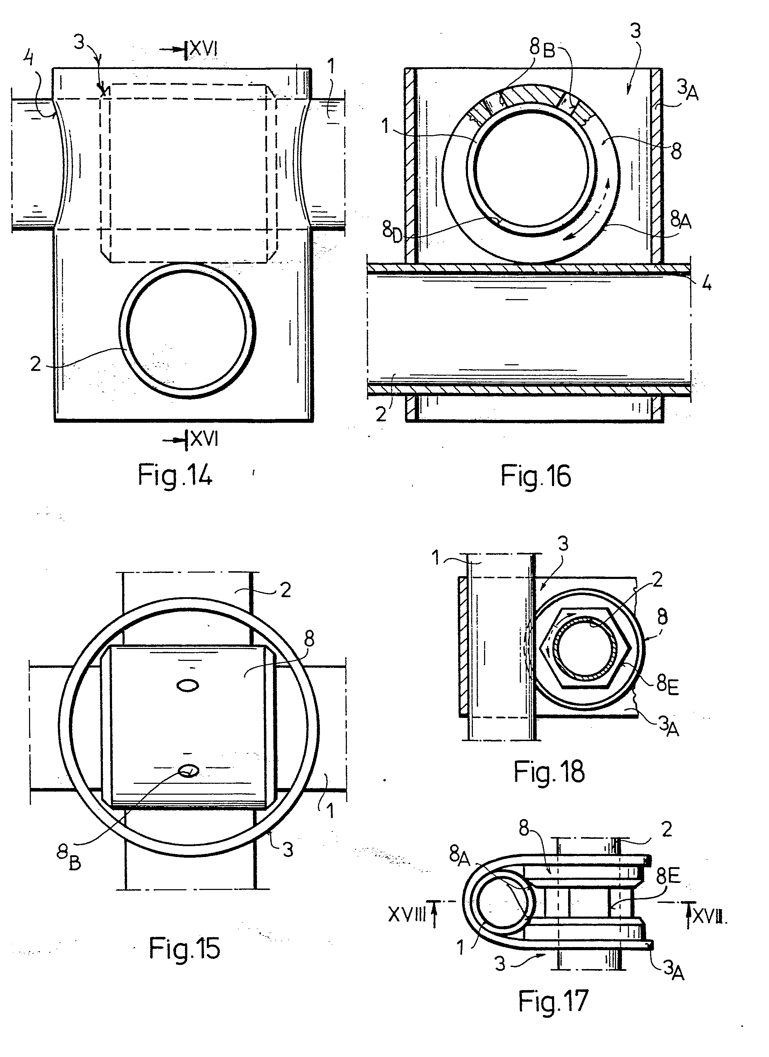

Das als Exzentereinsatz 8 ausgestaltete Spanneinsatzstück kann auch auf eines der zu verbindenden Rohre aufgezogen werden. Diese Ausführungsart ist in Fig.14-16 veranschaulicht. Es ist zu sehen, daß der Exzentereinsatz 8 auf das Rohr 1 aufgezogen ist (d.h. beim Einführen von Rohr 1 in die Öffnung 4 des Verbindungsstückes $3_A$). Der Exzentereinsatz 8 ist zu diesem Zweck mit einer zentralen Bohrung $8_D$ versehen, welche dem Rohr 1 ein freies Verdrehen gestaltet. Ferner hat der Exzentereinsatz 8 im vorliegenden Falle zwei radiale Öffnungen $8_B$ zum Ansetzen des Verdrehungswerkzeuges (das jedoch in der Zeichnung nicht dargestellt ist).

Schließlich wird in Fig.17 und 18 ein weiteres Ausführungsbeispiel der erfindungsgemäßen Vorrichtung 3 vorgezeigt, bei welcher das Verbindungsstück $3_A$ als Gurt ausgebildet ist, und somit Öffnungen 4 nur für das Rohr 2 vorgesehen sind. Der Exzentereinsatz 8 ist auch hier auf das Rohr 2 aufgezogen, besitzt aber zwei wirkende radiale Exzenterprofile $8_A$, welche als schräge Bogenflächen von beiden Seiten das Rohr 1 abstützen. Der Exzentereinsatz 8 ist in seiner Mitte mit einem Sechskantteil $8_E$ versehen, mittels welchem der Exzentereinsatz 8 (z.B. mit einem hier nicht eingezeichneten Gabelschlüssel) verdreht werden kann. Das selbstsperrende Zusammenspannen der Einzelteile erfolgt auch hier durch Verdrehung des Exzentereinsatzes 8 um etwa 90°.

Unsere Versuche, die wir mit den dargestellten Ausführungsformen der Vorrichtung 3 gemäß der Erfindung durchführten, haben den Beweis erbracht, daß mit ihrer Anwendung das schnelle und sichere Verbinden von Rohren oder Stangen an jedem Ort und Niveau, je nach Belieben möglich ist. Sie können zu Gerüsten beim Bauen, als Stellagen in Magazinen, zu Einfriedungen sowie auf Sport- und Spielplätzen als Gestelle sehr vorteilhaft und mit relativ geringem Aufwand angewendet werden.

Außerdem sind noch zahlreiche sonstige Varianten oder Kombinationen der Erfindung möglich.

Ein zusätzlicher Vorzug der Lösung gemäß der Erfindung besteht darin, daß die zu verbindenden Stangen verschiedenes Profil, die zu verbindenden Rohre aber auch verschiedene
Durchmesser haben können. Natürlich müssen dann die Öffnungen
4 dementsprechend ausgestaltet werden.

Die Spanneinsätze 5, die Spannkeile 7 und die Exzentereinsätze 8 können aus Metall von entsprechender Härte und
Schleißfestigkeit, wie z.B. aus Stahl, aber auch aus Plaste
oder sonst einem elastischen Stoff gefertigt werden.

PATENTANSPRÜCHE

1. Vorrichtung zur Knotenpunkt-Verbindung von Stangen und/oder Rohren, bestehend aus einem, zur Aufnahme der zu verbindenden Stangen und/oder Rohre (1,2) mit Öffnungen (4) versehenen Verbindungsstück ($3_A$), ferner aus einem Fixierungsstück zum Festhalten der Stangen und/oder Rohre (1,2) im Verbindungsstück ($3_A$), dadurch g e k e n n z e i c h n e t , daß das Fixierungsstück als gegenüber dem Verbindungsstück ($3_A$) bewegbares, und dabei die zusammenzufassenden Stangen und/oder Rohre (1,2) miteinander und mit dem Verbindungsstück ($3_A$) selbstsperrend verspannendes keilartiges bzw. exzentrisches Element (5;7;8) ausgestaltet ist.

2. Knotenpunkt-Verbindungsvorrichtung nach Anspruch 1, dadurch g e k e n n z e i c h n e t , daß das Verbindungsstück ($3_A$) als Rohrstück ausgestaltet ist, in welchem des als Spanneinsatz 5 ausgestaltete Fixierungsstück zwischen den zu verbindenden Stangen und/oder Rohren (1,2) verdrehbar eingesetzt, und mit einem axialen Exzenterprofil ($5_A$) versehen ist.

3. Verbindungsvorrichtung nach Anspruch 2, dadurch g e k e n n z e i c h n e t , daß das Fixierungsstück als Exzentereinsatz (8) ausgestaltet ist, der ein radiales Exzenterprofil ($8_A$) besitzt, wobei der Exzentereinsatz (8) zwischen dem Verbindungsstück ($3_A$) und der Stange und/oder dem Rohr (1,2) verdrehbar eingesetzt ist.

4. Vorrichtung nach Anspruch 1, dadurch g e - k e n n z e i c h n e t , daß das Fixierungsstück als ein auf die eine Stange oder Rohr (1 bzw. 2) aufziehbarer Exzentereinsatz (8) ausgestaltet ist, welcher mit einem, das andere Rohr oder Stange (2 bzw. 1) radial an zwei Flächen abstützenden Exzenterprofilpaar ($8_A$) versehen ist.

Fig.5

Fig.2

Fig.1

Fig.3

Fig.4

Fig. 6

Fig. 7

Fig.8

Fig.10

Fig.9

Fig. 11

Fig.13

Fig.12

Fig.14

Fig.16

Fig.15

Fig.18

Fig.17

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| Y,A | DE - C - 909 403 (MULDER) <br> * Fig. 4 * <br> -- | 1,4 | F 16 B 7/08 |
| A | DE - C - 1 045 181 (RHEINMAINISCHE GLASINSTRUMENTEN- UND THERMOMETER- FABRIK WALTER BÄTZ & CO.) <br> * Fig. 1, 2, 3, Position 12 * <br> -- | 2-4 | |
| A | FR - A - 471 838 (HORNBY) <br> * Fig. 1 * <br> -- | 2 | RECHERCHIERTE SACHGEBIETE (Int. Cl.³) |
| Y | FR - A - 1 120 986 (ROSY et al.) <br> * Fig. 1 * <br> -- | 1 | E 04 G 7/00 <br> F 16 B 7/00 |
| Y | FR - A - 1 091 746 (STE D'ENTREPRISE & DE POSE POUR TOUS PRODUITS TUBULAIRES (ENTREPOSE)) <br> * Fig. 1 * <br> ---- | 1 | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde lie- gende Theorien oder Grund- sätze
E: älteres Patentdokument, das jedoch erst am oder nach dem Anmeldedatum veröffentlicht worden ist
D: in der Anmeldung angeführtes Dokument
L: aus andern Gründen ange- führtes Dokument
&: Mitglied der gleichen Patent- familie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 21-06-1982 | ZAPP |

EPA Form 1503.1 06.78